# EUROPÄISCHE PATENTSCHRIFT

(11) **EP 2 366 565 B1**
(45) Veröffentlichungstag und Bekanntmachung des Hinweises auf die Patenterteilung: **25.05.2016**
(21) Anmeldenummer: 11001818.1
(22) Anmeldetag: 04.03.2011
(51) Int. Cl.: B60D 1/64

(54) **Kontaktvorrichtungsanordnung für eine Anhängekupplung**
Contact device assembly for a trailer coupling
Agencement de dispositif de contact pour un attelage

(30) Priorität: 16.03.2010 DE 202010003623 U
(43) Veröffentlichungstag der Anmeldung: 21.09.2011
(73) Patentinhaber: WESTFALIA - Automotive GmbH, 33378 Rheda-Wiedenbrück (DE)
(72) Erfinder: Beutin, Jörg, 33332 Gütersloh (DE); Domke, Friedrich, 33442 Herzebrock-Clarholz (DE); Kleinhans, Björn, 33442 Herzebrock-Clarholz (DE); Vahle, Dirk, 59320 Ennigerloh (DE)
(74) Vertreter: Patentanwälte Bregenzer und Reule Partnerschaftsgesellschaft mbB

(56) Entgegenhaltungen:
- DE-A1- 10 027 571
- DE-U1- 8 315 240
- DE-U1- 20 204 423
- DE-U1-202009 008 831

## Beschreibung

Die Erfindung betrifft eine Kontaktvorrichtungsanordnung für eine Anhängekupplung für ein Kraftfahrzeug, insbesondere ein Personen-Kraftfahrzeug, gemäß dem Oberbegriff des Anspruchs 1. Aus DE 20 2009 008 831 U1 geht eine Anhängekupplung mit einer gattungsgemäßen

Kontaktvorrichtungsanordnung der obigen Art hervor. Die Anhängekupplung hat einen Kupplungsarm, an dem eine Steckdose und somit also eine Kontaktvorrichtung befestigt ist. Damit diese Steckdose nicht beschädigt wird, wenn ein Abschleppseil über den Kupplungsarm geworfen wird, hat der Kupplungsarm eine integrierte Schutzfunktion. Die Kupplungskontur des Kupplungsarmes weist nämlich eine Schutzkontur auf, die vor die an sich stangenartig verlaufende Kupplungskontur vorsteht und die Kontaktvorrichtung bzw. Steckdose vor mechanischer Beschädigung schützt. Ein Abschleppseil oder ein Abreißseil kann also über die Schutzkontur hinweg gleiten, ohne die Steckdose zu beschädigen. Allerdings muss der Kupplungsarm entsprechend ausgestaltet sein. Man benötigt also beispielsweise entsprechend mehr Metall, um nicht nur den Kupplungsarm als solches, sondern auch die Schutzkontur auszubilden. Wenn die Schutzkontur wie beim Stand der Technik quasi integriert ist, wird der Kupplungsarm im Bereich der Schutzkontur geschwächt.
Ferner wird eine Schutzfunktion bezüglich Abschleppseilen nicht bei jeder Anhängekupplung benötigt. Wenn also beispielsweise am Zugfahrzeug oder Kraftfahrzeug eine Abschleppöse vorhanden ist, genügt ein sozusagen konventioneller Kupplungsarm. Die Steckdose muss auch dann, wenn sie am Kupplungsarm angeordnet ist, nicht besonders geschützt werden. Es gibt allerdings Situationen, dass beispielsweise keine Abschleppöse am Zugfahrzeug vorhanden ist oder diese durch die gesamte Kupplungsanordnung einschließlich eines Querträgers, an dem der Kupplungsarm befestigt ist, verdeckt oder ersetzt worden ist, so dass der Kupplungsarm für den Schleppbetrieb benötigt wird.

Es ist daher die Aufgabe der vorliegenden Erfindung, eine Kontaktvorrichtungsanordnung bereitzustellen, die bei optimalem Schutz für die Kontaktvorrichtung preisgünstig herzustellen und zweckmäßigerweise auch zu montieren ist.

Zur Lösung der Aufgabe ist eine Kontaktvorrichtungsanordnung gemäß der technischen Lehre des Anspruchs 1 vorgesehen.

Ein Grundgedanke der Erfindung ist es, dass die Schutzkontur nicht als integraler Bestandteil des Kupplungsarmes notwendig ist, sondern separat montiert wird. So kann die Kontaktvorrichtung - es kann eine elektrische und/oder optische Kontaktvorrichtung vorgesehen sein - durch den Schutzkörper geschützt werden, wenn dies erforderlich ist. Ist keine Schutzfunktion notwendig, beispielsweise wenn eine an sich übliche Abschleppöse am Kraftfahrzeug befestigt ist, kann der Schutzkörper wegbleiben oder eine konventionelle Steckdose montiert werden.

Mit der erfindungsgemäßen Kontaktvorrichtungsanordnung können also beliebige Kupplungsarme von Anhängekupplungen mit einer Kontaktvorrichtung versehen werden, bei denen zwischen dem Halteabschnitt und dem freien Ende des Kupplungsarmes ein Bauraum für die jeweilige Kontaktvorrichtung vorhanden ist.

Die Erfindung ist bei am Kraftfahrzeug feststehenden Kupplungsarmen, vom Kraftfahrzeug entfernbaren Kupplungsarmen und auch bei bezüglich des Kraftfahrzeugs beweglich gelagerten Kupplungsarmen anwendbar. Zweckmäßigerweise umfasst die Anhängekupplung eine Halterung, die den Halteabschnitt des Kupplungsarmes lösbar hält. Beispielsweise kann die Halterung eine Steckaufnahme zum Einstecken des Halteabschnitts, der dann ein Steckende bildet, aufweisen. Eine andere Ausführungsform der Erfindung kann auch vorsehen, dass die Halterung ein Schwenklager und/oder ein Linearführungslager umfasst, an dem der Kupplungsarm schwenkbar und/oder linear beweglich gelagert ist. Ein Bediener kann dann den Kupplungsarm zwischen einer zum Anhängen des Anhängers vorgesehenen Arbeitsstellung und einer für den Nichtgebrauch vorgesehenen Ruhestellung bewegen, beispielsweise manuell und/oder motorisch.

Es versteht sich, dass auch ein mit der erfindungsgemäßen Kontaktvorrichtungsanordnung ausgestalteter Kupplungsarm, insgesamt sogar eine Anhängekupplung, Gegenstand der Erfindung sind.

Bevorzugt ist eine Ausrichtung der Kontaktvorrichtung bzw. deren Gehäuse derart, dass eine Kontaktstirnseite der Kontaktvorrichtung im am Kupplungsarm montierten Zustand der Kontaktvorrichtungsanordnung von einer Querseite des Kupplungsarmes zugänglich ist. Die Kontaktvorrichtung ist also quer zu einer Längserstreckungsrichtung des Kupplungsarmes orientiert, die sich zwischen einerseits dem Halteabschnitt und andererseits dem freien Ende des Kupplungsarmes erstreckt. Der Bediener kann also die Steckdose von der Seite her bedienen.

Die Aufgleitkontur erstreckt sich im am Kupplungsarm montierten Zustand der Kontaktvorrichtung zweckmäßigerweise über den von der Kupplungsarmkontur am weitesten entfernten Abschnitt des Gehäuses hinweg. Mithin befindet sich also das Gehäuse unterhalb der Aufgleitkontur bzw. in einem Zwischenraum zwischen der Aufgleitkontur und dem Kupplungsarm, so dass ein optimaler Schutz vorhanden ist.

Die Aufgleitkontur ist insbesondere an derjenigen Seite der Kontaktvorrichtung zweckmäßig, die vom Kuppelkörper abgewandt ist. Wenn ein Bediener also beispielsweise in einem Zwischenraum zwischen der Kontaktvorrichtung und dem Halteabschnitt des Kupplungsarmes das Objekt, z.B. das Abschleppseil, auflegt, gleitet dieses an der Aufgleitkontur entlang und über die Kontaktvorrichtung hinweg, um am Ende dieser Bewegung am freien Endabschnitt des Kupplungsarmes zu liegen zu kommen. Bei der dazwischenliegenden Bewegung ist keinerlei Beschädigung der Kontaktvorrichtung zu befürchten.

Besonders bevorzugt ist es, wenn die Aufgleitkontur flach geneigt ist, beispielsweise einen Winkel von etwa 60°, vorzugsweise etwa 50° bis 40°, besonders bevorzugt etwa 45°, bezüglich einer Horizontalen (beim Betrieb der Anhängekupplung) und/oder bezüglich einem Bereich des Kupplungsarmes verläuft, von dem aus die Aufgleitkontur sich in Richtung der Kontaktvorrichtung hin erstreckt. Es versteht sich, dass flachere Winkel, d.h. flachere Winkel von kleiner als 60° oder 45° die Situation noch verbessern.

Nun ist eine Ausführungsform der Erfindung möglich, bei der der Schutzkörper einen integralen Bestandteil des Gehäuses bildet.

Besonders bevorzugt ist jedoch eine Ausführungsform, bei der der Schutzkörper ein von dem Gehäuse separates Bauteil ist. Dann kann also wahlweise der Schutzkörper.an der Kontaktvorrichtung montiert werden oder auch wegbleiben, wenn er nicht gebraucht wird. Damit ist ein optimales Gleichteilprinzip realisiert, d.h. ein und dieselbe Kontaktvorrichtung kann sowohl mit als auch ohne Schutzkörper an dem Kupplungsarm montiert werden.

Mindestens ein Teilabschnitt der Aufgleitkontur ist zweckmäßigerweise in beiden der vorgenannten Fälle an dem Gehäuse angeordnet. Dies bedeutet, dass beispielsweise ein Teil der Aufgleitkontur an dem Gehäuse, ein anderer jedoch an dem vom Gehäuse separaten Schutzkörper vorhanden ist. Es versteht sich, dass selbstverständlich alle Teilabschnitte der Aufgleitkontur bzw. diese als Ganzes an dem Gehäuse angeordnet sein kann.

Das Gehäuse ist im am Kupplungsarm montierten Zustand der Kontaktvorrichtungsanordnung zwischen dem Schutzkörper und dem Kupplungsarm angeordnet. Somit ist es also optimal gegenüber Fremdeinflüssen geschützt.

Der Schutzkörper und das Gehäuse weisen zweckmäßigerweise mindestens ein Paar miteinander fluchtender Montagebohrungen für einen zum Einschrauben in den Kupplungsarm vorgesehenen Montagebolzen, z.B. eine Schraube, eine Niet oder dergleichen, auf. Dies bedeutet, dass mit geringem Aufwand, nämlich mit ein und demselben Montagebolzen, nicht nur der Schutzkörper, sondern auch die Kontaktvorrichtung bzw. deren Gehäuse montierbar sind. Weiterhin ist dadurch der Vorteil vorhanden, dass man für die Montage des Schutzkörpers keine separaten Montagestellen vorsehen muss, d.h. dass der Kupplungsarm besonders einfach aufgebaut sein kann. Es ist aber auch möglich, dass für den Schutzkörper und die Kontaktvorrichtung separate Montagestellen, insbesondere am Kupplungsarm, vorgesehen sind.

Mit einem Montagebereich ist der Schutzkörper an dem Kupplungsarm befestigbar. An diesem Montagebereich ist zweckmäßigerweise eine Aufnahme vorhanden, die zur Aufnahme des Kupplungsarmes bzw. dessen Kupplungsarmkontur dient. So kann beispielsweise eine U-förmige oder L-förmige Aufnahme vorgesehen sein, in die der Kupplungsarm sozusagen passt. Hierbei ist ein formschlüssiger Halt zweckmäßig. So ist auf diesem Wege ein zusätzlicher, formschlüssiger Halt des Kupplungskörpers an dem Kupplungsarm gegeben, auch abseits beispielsweise der vorgenannten Montage mittels Schrauben.

An dieser Stelle ist noch nachzutragen, dass selbstverständlich auch sonstige Montagemethoden des Schutzkörpers und/oder des Gehäuses der Kontaktvorrichtung am Kupplungsarm denkbar sind, so z.B. ein Ankleben, Einrasten, Anstecken oder dergleichen.

Der Schutzkörper hat zweckmäßigerweise eine Aussparung und/oder eine Fixierung für eine zu der Kontaktvorrichtung führende Leitung, beispielsweise einer elektrischen und/oder optischen Leitung. Weiterhin ist es vorteilhaft, wenn der Schutzkörper eine Aussparung für ein Scharnier oder Gelenk der Kontaktvorrichtung aufweist, mit dem ein Deckel an dem Gehäuse schwenkbar gelagert ist. Mit dem Deckel können beispielsweise Kontakte der Kontaktvorrichtung geschützt werden. In der Aussparung ist die Leitung und/oder das Scharnier zweckmäßigerweise derart aufgenommen, dass es nicht oder jedenfalls nicht in solcher Weise vor die Außenkontur der Gesamtanordnung der Kontaktvorrichtungsanordnung hervorsteht, dass es durch das angreifende Objekt, beispielsweise das Abschleppseil, beschädigt werden kann.

Der Schutzkörper begrenzt zweckmäßigerweise eine Gehäuseaufnahme zur Aufnahme des Gehäuses der Kontaktvorrichtung. Hierfür ist beispielsweise eine runde Aussparung oder Aufnahme vorgesehen. Bevorzugt eine Konfiguration derart, dass der Schutzkörper zusammen mit dem Kupplungsarm die Gehäuseaufnahme begrenzt.

Es versteht sich, dass das Gehäuse beispielsweise Haltemittel aufweisen kann, z.B. Rastmittel, um das Gehäuse am Schutzkörper und/oder dem Kupplungsarm zu halten. So kann eine Ausführungsform der Erfindung vorsehen, dass der Schutzkörper fest, z.B. mittels Schrauben oder durch Verkleben, mit dem Kupplungsarm verbunden ist, die Steckdose oder das Gehäuse der Kontaktvorrichtung insgesamt jedoch lediglich mit dieser Gesamtanordnung verrastet wird. Dadurch ist eine besonders einfache Montage möglich. So können beispielsweise Rastausnehmungen und/oder Rasthaken in einem Innenraum der Gehäuseaufnahme oder auch außerhalb derselben am Schutzkörper vorhanden sein, die mit entsprechenden Gegenrastmitteln. z.B. korrespondierenden Rastaufnahmen und Rastvorsprüngen, an dem Gehäuse der Kontaktvorrichtung zusammenwirken.

Diese Anordnung ist insbesondere deshalb vorteilhaft, weil so das Gehäuse der Kontaktvorrichtung leicht austauschbar ist, z.B. wenn es trotz der erfindungsgemäßen Schutzmaßnahmen beschädigt wird. So kommt es häufig beispielsweise dazu, dass ein Deckel vom Gehäuse abreißt, so dass das Gehäuse als Ganzes ersetzt werden sollte.

Eine Ausführungsform die in der Zeichnung nicht dargestellt ist, kann vorsehen, dass der Tragabschnitt des Kupplungsarms für die Kontaktvorrichtung im Wesentlichen geradlinig verläuft. Somit steht dann das Gehäuse der Kontaktvorrichtung sozusagen frei, wobei die Schutzfunktion des erfindungsgemäßen Schutzkörpers einen ausreichenden Schutz darstellt.

Bevorzugt ist jedoch eine Anordnung des Steckdosengehäuses an einer Innenbogenseite des Bogenabschnitts des Kupplungsarmes. Der Bogen kann zwar kreisrund sein, könnte aber auch eine sonstige, beispielsweise elliptische, Krümmung aufweisen. Jedenfalls ist das Gehäuse der Kontaktvorrichtung bei dieser Konfiguration zweckmäßigerweise sozusagen in der "Beuge" oder im Innenraum des gekröpften Abschnittes des Kupplungsarms angeordnet, so dass dadurch bereits ein gewisser Schutz dargestellt ist.

Bevorzugt ist dabei, dass zumindest ein Teilabschnitt der Aufgleitkontur sich in der Art einer Sekante über den Bogenabschnitt hinweg erstreckt. Die Anordnung an der Innenbogenseite hat beispielsweise den Vorteil, dass das in einer üblichen Ausgestaltung im Querschnitt runde Gehäuse sozusagen in den Innenbogen hineinpasst. Der Schutzkörper überdeckt das Gehäuse, so dass ein Schutz gegen das angreifende Objekt und entlang gleitende Objekt gewährleistet ist.

Bevorzugt ist der Schutzkörper in der Art einer Spange ausgestaltet, unterhalb derer das Gehäuse der Kontaktvorrichtung angeordnet ist. Mithin befindet sich also das Gehäuse zwischen der Spange und dem Kupplungsarm, so dass es vor Umwelteinflüssen optimal geschützt ist.

An dieser Stelle ist auch nachzutragen, dass zweckmäßigerweise an den Querseiten des Schutzkörpers, insbesondere der Spange, einerseits ein Leitungsauslass für das Gehäuse und auf der anderen Seite die Kontaktseite vorgesehen sein können.

Bevorzugt ist es, wenn der Schutzkörper eine vom Kupplungsarm abgewandte, zum Kupplungsarm entgegengesetzte Seite des Gehäuses derart ummantelt, dass das Gehäuse nicht vor die Aufgleitkontur vorsteht. Im mechanisch beanspruchten Bereich ist also ein optimaler Schutz durch den Schutzkörper gewährleistet.

Es versteht sich, dass der Schutzkörper als massives Bauteil, zumindest abschnittsweise, ausgestaltet sein kann. Eine bevorzugte Ausführungsform sieht vor, dass der Schutzkörper Hohlräume aufweist. Weiterhin ist es zweckmäßig, wenn der Schutzkörper eine Verstärkungsrippenstruktur aufweist. Die Verstärkungsrippen der Verstärkungsrippenstruktur verlaufen zumindest zum Teil etwa rechtwinkelig zu einer Gleitfläche der Aufgleitkontur. Somit ist die Aufgleitkontur sozusagen auf Streben abgestützt. Diese Streben oder Rippen verlaufen zweckmäßigerweise entlang einer Normalenrichtung der Gleitfläche.

Der Schutzkörper weist zweckmäßigerweise eine Querbreite auf, die etwa der Querbreite des Kupplungsarmes entspricht. Somit deckt also der Schutzkörper die Kontaktvorrichtung etwa entsprechend der Querbreite des Kupplungsarmes in schützender Weise ab.

Es versteht sich, dass die Aufgleitkontur zwar an der Unterseite des Kupplungsarmes vorgesehen sein könnte. Bevorzugt ist jedoch die Anordnung der Kontaktvorrichtung an einer vertikal oberen Seite des Kupplungsarmes, weil dann die Bodenfreiheit des Kraftfahrzeuges nicht beeinträchtigt ist.

Bevorzugt ist es, wenn der Aufgleitabschnitt im am Kupplungsarm montierten Zustand der Kontaktvorrichtungsanordnung an einer den Halteabschnitt zugewandten Seite des Tragabschnitts angeordnet ist.

Es versteht sich, dass das Gehäuse der Kontaktvorrichtung beispielsweise beidseits vor den Schutzkörper vorstehen kann, wobei eine Seite dann die Kontakte bereitstellt, während an der anderen Seite dann die Zuleitung angeordnet ist. Es ist aber auch eine Anordnung denkbar, bei der der Schutzkörper eine Rückwand für das Gehäuse der Kontaktvorrichtung bildet oder eine der Rückwand des Gehäuses der Kontaktvorrichtung entsprechende Kontur aufweist. Mithin begrenzt also der Schutzkörper bei dieser Ausgestaltung der Erfindung sozusagen eine Aufnahme mit einer Rückwand für das Gehäuse.

Nachfolgend werden Ausführungsbeispiele der Erfindung anhand der Zeichnung erläutert. Es zeigen:
- Figur 1: eine perspektivische Schrägansicht eines ersten Ausführungsbeispiels der Erfindung,
- Figur 2a: eine Seitenansicht der Anhängekupplung gemäß Figur 1, jedoch ohne Kontaktvorrichtung,
- Figur 2b: die Ansicht gemäß Figur 2a, jedoch mit Kontaktvorrichtung,
- Figur 3a: eine Ansicht etwa entsprechend Figur 2a, jedoch schräg und von der anderen Seite,
- Figur 3b: die Ansicht entsprechend Figur 3a, jedoch mit montierter Kontaktvorrichtung,
- Figur 4: eine perspektivische Ansicht von hinten eines zweiten Ausführungsbeispiels einer erfindungsgemäßen Anhängekupplung, die in
- Figur 5: schräg von vorn und in
- Figur 6: von der Seite sowie in
- Figur 7: von oben dargestellt ist.

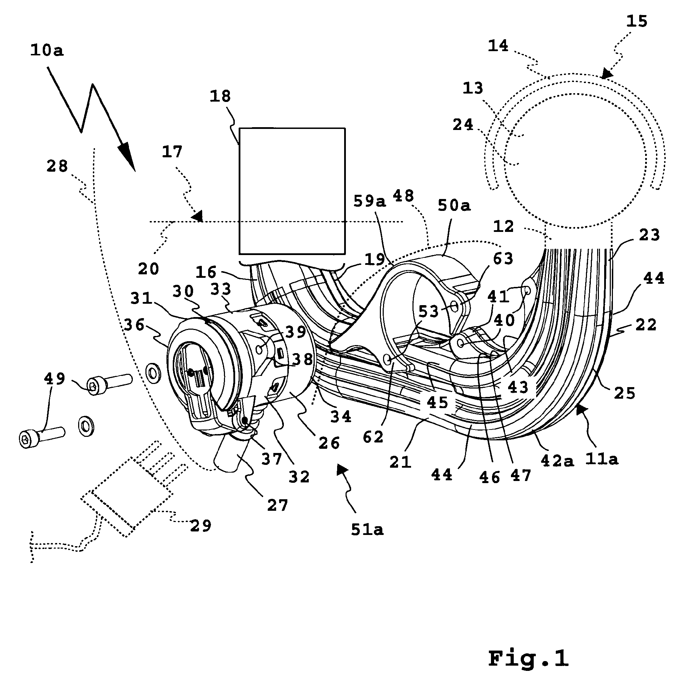

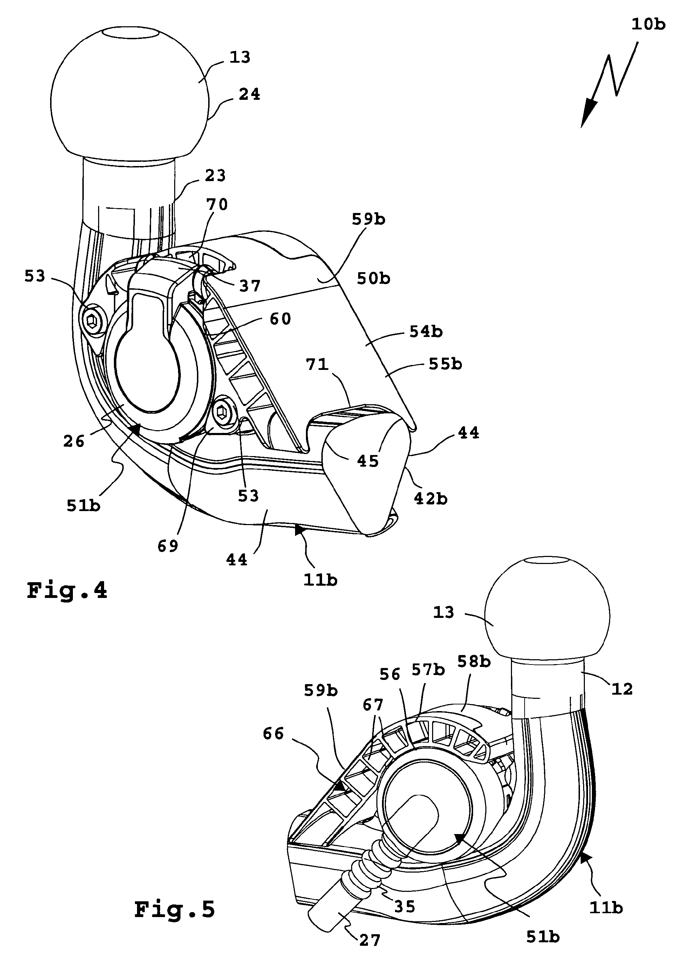

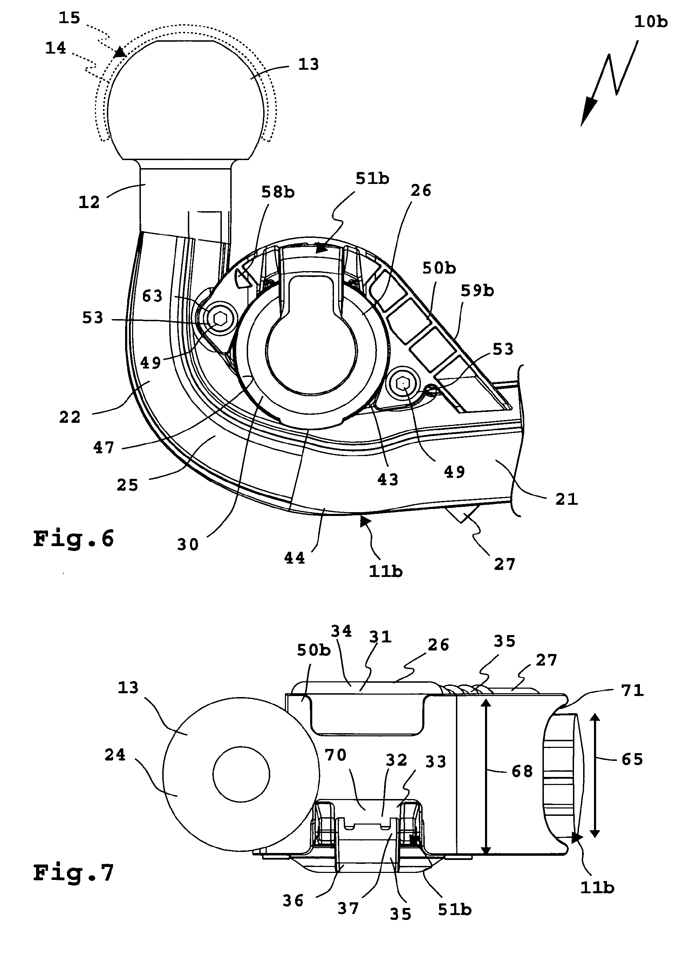

Bei den nachfolgend beschriebenen Ausführungsbeispielen sind gleiche oder gleichartige Komponenten mit denselben Bezugszeichen versehen. Zur Veranschaulichung von Unterschieden sind beim Ausführungsbeispiel gemäß Figuren 1-3b der Kleinbuchstabe "a" an die jeweiligen Bezugsziffern angeführt, während beim zweiten Ausführungsbeispiel gemäß Figuren 4-7 der Kleinbuchstabe "b" verwendet ist.

Anhängekupplungen 10a, 10b haben Kupplungsarme 11a, 11b, an deren freien Enden 12 jeweils ein Kugelkopf 13 zur Befestigung einer Zugkugelkupplung 14 eines Anhängers 15 angeordnet ist. Ein dem freien Ende 12 entgegengesetztes Ende der Kupplungsarme 11a, 11b ist als Halteabschnitt 16 zur Befestigung an einem Kraftfahrzeug 17 ausgebildet. Der Halteabschnitt 16 ist beispielsweise als ein Lagerende ausgebildet, das an einer fahrzeugseitigen, ein Lager aufweisenden Halterung 18 verschieblich und/oder verschwenkbar gelagert ist. Die Halterung 18 könnte auch ein festes Lager zum dauerhaften, nicht entfernbaren Halten des Kupplungsarmes 11a, 11b sein oder auch beispielsweise eine Steckaufnahme, in die der Halteabschnitt 16 einsteckbar ist. Die Halterung 18 ist beispielsweise an einem Querträger oder einem sonstigen Bauteil einer nicht dargestellten Karosserie des Kraftfahrzeuges 17 befestigt.

In der gezeigten Arbeitsstellung steht ein Armabschnitt 19 des Kupplungsarms 11a, 11b nach schräg unten vor eine Fahrzeugkontur 20, beispielsweise eine Stoßfängerkante, des Kraftfahrzeugs 17 vor. Der Armabschnitt 19 ist beispielsweise gekrümmt. An den Armabschnitt 19 schließt sich ein im Wesentlichen geradlinig oder linear verlaufender Armabschnitt 21 an, der in einen Krümmungsabschnitt 22 übergeht, oberhalb dessen der Kupplungsarm 11a, 11b wiederum etwa geradlinig verläuft und einen Armabschnitt 23, der zugleich das freie Ende 12 darstellt, aufweist. Es versteht sich, dass anstelle des einen Kuppelkörper 24 bildenden Kugelkopfes 13 auch ein sonstiges Kupplungsglied vorgesehen sein könnte, beispielsweise ein polygonales. In diesem Falle wäre der Kuppelkörper 24 dann zweckmäßigerweise drehbar am oberen Armabschnitt 23 angeordnet, so dass der Anhänger 15 um eine Fahrzeughochachse bezüglich des Kraftfahrzeuges 17 schwenken kann. Das ist allerdings beim Ausführungsbeispiel nicht der Fall.

Der Krümmungsabschnitt 22 bildet einen Tragabschnitt 25 zum Tragen einer Kontaktvorrichtung 26. Die Kontaktvorrichtung 26 ist in am Kraftfahrzeug 17 montiertem Zustand über eine Verbindungsleitung 27 mit einem Bordnetz 28 des Kraftfahrzeuges 17 verbunden. Über die Kontaktvorrichtung 26 ist eine signaltechnische und/oder energietechnische Verbindung des Anhängers 15 mit dem Bordnetz 28 herstellbar. Dazu wird beispielsweise ein schematisch dargestellter Stecker 29 in (nicht in der Zeichnung dargestellte) Steckkontakte an einer Kontaktseite 30 der Kontaktvorrichtung 26 eingesteckt, der zur Herstellung einer elektrischen und/oder optischen Verbindung zwischen dem Kraftfahrzeug 17 und dem Anhänger 15 dient.

Die Kontaktseite 30 der Kontaktvorrichtung 26 ist an einer Stirnseite 31 eines Gehäuses 32 der Kontaktvorrichtung 26 vorgesehen. Das Gehäuse 32 weist weiterhin eine Umfangswand 33 auf sowie eine zweite, zu der Stirnseite 31 entgegengesetzte Stirnseite 34, in deren Nähe die Verbindungsleitung 27 in das Gehäuse 32 hineinführt. Hierfür ist beispielsweise eine Tülle 35 vorgesehen, die seitlich aus der Umfangswand 33 im Bereich der Stirnseite 34 herausführt.

Die Kontaktseite 30, d.h. die schmutzempfindlichen Kontakte der Kontaktvorrichtung 26, sind in an sich bekannter Weise geschützt, nämlich durch einen Deckel 36, der mittels eines Scharniers 37 schwenkbeweglich am Gehäuse 32 gelagert ist.

Das Gehäuse 32 hat eine dosenartige oder topfartige Gestalt.

Von dem Gehäuse 32 stehen seitlich Montagevorsprünge 38 ab, vorliegend von der Umfangswand 33. Die Montagevorsprünge 38 sind in der Art von Laschen ausgestaltet. Die beiden Montagevorsprünge 38 sind an einander diametral gegenüberliegenden Seiten der Umfangswand 33 angeordnet, vorliegend nahe der Stirnseite 31.

Die Montagevorsprünge 38 weisen Montagebohrungen 39 auf, die mit Montagebohrungen 40 an den Kupplungsarmen 11a, 11b fluchten (wenn die Kontaktvorrichtung 26 am jeweiligen Kupplungsarm 11a, 11b montiert ist).

Die Montagebohrungen 40 sind nunmehr nicht am Vollkörper oder Stangenabschnitt des Kupplungsarms 11a oder 11b angeordnet, sondern an Montagevorsprüngen 41, die vor eine Kupplungsarmkontur 42a, 42b des Kupplungsarm 11a, 11b nach oben hin (bezogen auf die Arbeitsstellung gemäß der Zeichnungen) vorstehen.

Die Kupplungsarmkonturen 42a, 42b sind zumindest in Bezug auf ihren Kontaktbereich bzw. ihren Haltebereich für die Kontaktvorrichtungen 26 vorliegend sehr ähnlich ausgestaltet und haben an ihrer der Kontaktvorrichtung 26 zugewandten Oberseite Lagerflächen 43, die zu den benachbarten Querseiten 44 der Kupplungsarme 11a, 11b hin abgerundet sind. Mithin gehen also die Lagerflächen 43 mit Krümmungsflanken 45 in die Querseiten 44 über. Während die Kupplungsarmkontur 42a im Querschnitt im Wesentlichen quadratisch ist, zumindest im Bereich der Kontaktvorrichtung 26, ist die Kupplungsarmkontur 42b im Querschnitt im Wesentlichen dreieckförmig. Darauf kommt es jedoch wie folgt bezüglich der weiteren Merkmale der Erfindung, die nachfolgend noch deutlich werden, nicht an.

Die Montagevorsprünge 41 sind an den Endbereichen des Tragabschnitts 25, d.h. also an den Endbereichen des Krümmungsabschnittes 22 bei der vorliegenden Ausgestaltung einer erfindungsgemäßen Anhängekupplung, angeordnet. Die Montagevorsprünge 41 sind in der Art von Reitern an der Oberseite bzw. Lagerfläche 43 angeordnet. Die Kontaktvorrichtungen 26 sind an einer Innenbogenseite 47 des Tragabschnittes 25 angeordnet, der etwa einen Innenradius aufweist, der dem Außenradius der Umfangswand 33 des Gehäuses 32 entspricht. Quasi in Fortsetzung dieses Innenradius, vorteilhaft eine etwa runde Aufnahme oder ausgerundete Aufnahme 46 für das Gehäuse 32 bildend, stehen die Montagevorsprünge 41 vor die Oberseite des Kupplungsarmes 11a, 11b vor. Bereits dadurch ist ein gewisser Schutz des Gehäuses 32 gewährleistet.

Wenn allerdings ein Objekt auf das Gehäuse 32 einwirkt, beispielsweise ein Abschleppseil 48 (schematisch dargestellt), könnte dies zur Beschädigung des Gehäuses 32 führen. Das Gehäuse 32 ist bei den Anhängekupplungen 10a, 10b jedoch durch einen Schutzkörper 50a oder 50b geschützt, so dass insgesamt zusammen mit den Kontaktvorrichtungen 26 Kontaktvorrichtungsanordnungen 51a, 51b vorhanden sind.

Die Schutzkörper 50a, 50b sind nachträglich montierbar, so dass die Gehäuse 32 mit und ohne Schutzkörper 50a, 50b am Kupplungsarm 11a, 11b montierbar sind. Die Schutzkörper 50a, 50b haben mit Vorteil dazu Montagebohrungen 53, die nicht (was an sich möglich wäre) zur Montage an separaten, speziell für die Schutzkörper 50a, 50b vorgesehenen Montagebohrungen am Kupplungsarm 11a, 11b vorgesehen sind, sondern sozusagen zu den Montagebohrungen 40 passen, die ohnehin schon zur Montage der Gehäuse 32 bzw. der Kontaktvorrichtung 26 vorhanden sind. Die Montagebohrungen 53 fluchten also mit den Montagebohrungen 39, 40, so dass Montagebolzen 49, optional mit Unterlegscheiben (siehe Figur 1), durch die Montagebohrungen 39, 53 durchsteckbar und in die Montagebohrungen 40 einschraubbar sind.

Die Schutzkörper 50a, 50b sind in der Art von Spangen ausgestaltet, die die Gehäuse 32 einhausen. Somit sind die an sich empfindlichen Gehäuse 32 optimal geschützt. Dabei ist nachzutragen, dass die Gehäusewände, beispielsweise die Umfangswand 33, des Gehäuses 32 vergleichsweise dünn ausgestaltet sein können, was materialsparend ist, weil nämlich der mechanische Schutz für die Kontaktvorrichtungen 26 durch die Schutzkörper 50a, 50b größtenteils bereitgestellt wird. Ansonsten reduziert sich die Schutzfunktion der Gehäuse 32 auf eine elektrische Schutzfunktion, d.h. sie schützen die in ihnen angeordneten elektrischen Komponenten, beispielsweise Steckkontakte, Crimpverbindungen, flexible Leitungen, Sensoren und dergleichen.

Die Schutzkörper 50a, 50b haben Rampen 54a, 54b, die sich zwischen dem Halteabschnitt 16 und den Gehäusen 32 erstrecken. Die Rampen 54a, 54b sind an Rampenabschnitten 55a, 55b vorgesehen, die sich (im montierten Zustand) von dem im Wesentlichen geradlinig verlaufenden Armabschnitt 23 weg in Richtung eines Scheitels 56 der Umfangswände 33 bzw. der Gehäuse 32 erstrecken. Im Bereich des Scheitels 56 stehen die Gehäuse 32 am weitesten von der Oberseite des Kupplungsarmes 11a, 11b ab. Die Rampen 54a, 54b gehen dann in Krümmungsabschnitte 57a, 57b der Schutzkörper 50a, 50b über, die sich zwischen Halteschenkeln 58a, 58b und den Rampenabschnitten 55a, 55b erstrecken.

Insbesondere die freie Seite des Schutzkörpers 50a im Bereich der Rampe 54a, 54b, aber auch die freien Seiten des Krümmungsabschnittes 57a, 57b sowie der Halteschenkel 58a, 58b bilden Bestandteile von Aufgleitkonturen 59a, 59b, an denen ein Objekt, beispielsweise das Abschleppseil 48, entlang gleiten kann, also über das Gehäuse 32 hinweg, vorzugsweise so, dass keine Berührung mit dem Gehäuse 32 stattfindet.

Die Schutzkörper 50a, 50b sind in der Art von Spangen ausgestaltet, die in der Art von Sekanten über der Innenbogenseite 47 des Tragabschnittes 25 bzw. Krümmungsabschnittes 22, zumindest im Bereich der Rampe 54a, 54b verlaufen. Jedenfalls sind die Gehäuse 32 von vertikal oben her gesehen (beim Betrieb der Anhängekupplung 10a, 10b) durch die Schutzkörper 50a, 50b geschützt.

Insbesondere im Bereich des Halteschenkels 58a, 58b sowie des Krümmungsabschnittes 57a, 57b, aber auch an der dem Gehäuse 32 zugewandten Stirnseite der Rampenabschnitte 55a, 55b bilden die Schutzkörper 50a, 50b eine Aufnahmekontur 61 aus. Die Aufnahmekontur 61 bildet zusammen mit der Aufnahme 46 des Kupplungsarmes 11a, 11b insgesamt eine Gehäuseaufnahme 60 zur Aufnahme des Gehäuses 32 der Kontaktvorrichtung 26. Die Aufnahmekontur 61 und die Aufnahme 46 sind zueinander komplementär dergestalt, dass die den kompletten Außenumfang, d.h. vorliegend die Umfangswand 33, des Gehäuses 32 aufnehmen können, insbesondere im Wesentlichen flächig und/oder formschlüssig. Somit könnte also im Prinzip die Dose bzw. das Gehäuse 32 unmittelbar durch die Gehäuseaufnahme 60 gehalten werden. Als zusätzliche Maßnahme könnte vorgesehen sein, dass beispielsweise im Innenraum der Gehäuseaufnahme 60 Rastmittel zum Verrasten mit Rastmitteln an der Kontaktvorrichtung 26, insbesondere deren Gehäuse 32, vorgesehen sind. So könnten beispielsweise Rasthaken, Rastzungen oder dergleichen am Innenumfang der Gehäuseaufnahme 60 vorgesehen sein, die mit Rastaufnahmen an der Umfangswand 33 verrastbar sind.

Die Rampen 54 verlaufen ausgehend vom Armabschnitt 21, an den sie angrenzen, verhältnismäßig flach, vorzugsweise in einem Winkel von etwa 60° bis 45°. Dadurch stellt der Schutzkörper 50a, 50b nur ein geringes Hindernis für das angreifende Objekt bzw. das Abschleppseil 48 dar, so dass dieses sozusagen auf den Schutzkörper 50a auf gleitet, wenn es in an sich nicht erwünschter Weise in einen Zwischenraum zwischen einerseits dem Halteabschnitt 16 und andererseits dem Schutzkörper 50a, 50b gelangt (siehe Figur 1).

Auch in dem entgegengesetzten Zwischenbereich zwischen einerseits dem Schutzkörper 50a, 50b und andererseits dem Kupplungsarm 11a, 11b ist ein Aufgleiten des angreifenden Obj ekts auf den Schutzkörper 50a, 50b möglich. Hierzu ist der Halteschenkel 58a, 58b außenseitig entsprechend ausgerundet, so dass das Objekt auf die Aufgleitkontur 59a, 59b aufgleitet.

Selbstverständlich ist es vorteilhaft, wenn ein erfindungsgemäßer Schutzkörper an die Außenkontur des jeweiligen Kupplungsarmes angepasst ist, so dass er nicht nur an eventuell vorhandenen Montagebohrungen, Bolzen und dergleichen, gehalten wird, sondern auch durch Formschluss.

Entsprechende Formschlussflächen könnten auch vorteilhaft verklebt werden, was jedoch beim Ausführungsbeispiel nicht der Fall ist, insbesondere auch im Sinne einer leichten Austauschbarkeit bzw. Auswechselbarkeit, wenn beispielsweise der Schutzkörper 50a, 50b oder die Kontaktvorrichtung 26 beschädigt wird (z.B. bei einem Unfall).

Beim Schutzkörper 50a sind die Montagebohrungen 53 an Montagevorsprüngen 62 vorgesehen, die vor den Rampenabschnitt 55a bzw. den Halteschenkel 58a in Richtung des Kupplungsarms 11a vorstehen. Zwischen dem Montagevorsprung 62 und dem Rampenabschnitt 55a und dem Montagevorsprung 63 und dem Halteschenkel 58a ist eine Stufe ausgebildet, die zur Kupplungsarmkontur 42a sozusagen passt. Der Schutzkörper 50a liegt nämlich mit den Innenseiten dieser Stufe an den korrespondierenden Flächen des Kupplungsarmes 11a an, nämlich der Querseite 44 sowie der oberseitigen Lagerfläche 43.

Die Kontaktvorrichtungsanordnung 51a ist nun so getroffen, dass die Montagebolzen 49 zunächst die Montagevorsprünge 38 des Gehäuses 32 durchdringen und dann die Montagevorsprünge 62, 63 des Schutzkörpers 50a. Mithin sind also die Montagevorsprünge 62, 63 zwischen den Montagevorsprüngen 38 und 41 angeordnet.

Weiterhin baut der Schutzkörper 50a verhältnismäßig schmal. Eine Querbreite 64 des Schutzkörpers 50a ist nämlich kleiner als eine Querbreite 65 des Kupplungsarmes 11a. Die Querbreite 64 entspricht etwa einer Querbreite der Montagevorsprünge 41. Mithin steht also ein zur Stirnseite 31 oder 34 benachbarter Anteil der Umfangswand 33 nach außen bzw. seitlich vor den Schutzkörper 50a, 50b vor.

Des Weiteren ist das Scharnier 37 beim Kupplungsarm 11a an der vom Übergreif- oder Krümmungsabschnitt 57a abgewandten Seite angeordnet, d.h. neben dem Grundkörper des Kupplungsarmes 11a, so dass insoweit ein gewisser Schutz dargestellt ist.

Während der Schutzkörper 50a beispielsweise ein massives Kunststoff- und/oder Metallbauteil ist, d.h. keine Hohlräume aufweist, ist der Schutzkörper 50b zumindest teilweise mit Kavitäten versehen, so dass er besonders leicht baut. Allerdings ist eine Verstärkungsrippenstruktur 66 vorgesehen. Rippen 67 der Verstärkungsrippenstruktur 66 verlaufen zweckmäßigerweise orthogonal zur jeweiligen Gleitfläche der Aufgleitkontur 59b, beispielsweise in Normalenrichtung bezüglich der Rampe 54b.

Eine Querbreite 68 des Schutzkörpers 50b entspricht etwa der Kupplungsarm-Querbreite 65. Die Querbreite 68 entspricht weiterhin etwa einer Querlänge bzw. einem Abstand des Gehäuses 32 zwischen dessen Stirnseiten 34 und 31, so dass das Gehäuse 32 quasi über seine gesamte Länge vom Schutzkörper 50b überdeckt ist, was einen optimalen Schutz darstellt.

Einen weiteren Unterschied zum Schutzkörper 50a stellt es dar, dass der Schutzkörper 50b die Montagevorsprünge 38 des Gehäuses 32 überdeckt, d.h. dass die Montagevorsprünge 38 in einem vom Schutzkörper 50b und dem Kupplungsarm 11b begrenzten Innenraum angeordnet sind. Die Montagebohrungen 53 befinden sich einerseits an einem freien Ende des Halteschenkels 58b und andererseits an einem Montagevorsprung 69, der in Richtung der Gehäuseaufnahme 60 bzw. Aufnahmekontur 61 vom Rampenabschnitt 55b absteht.

Während der Schutzkörper 50a im Bereich des Krümmungsabschnittes 57a und somit also des Gehäuses 32 eine kleinere Höhe aufweist, baut der Schutzkörper 50b im Bereich seines Krümmungsabschnittes 57b verhältnismäßig hoch. Auch dorthin erstreckt sich die Verstärkungsrippenstruktur 66, so dass trotz großer Höhe des Schutzkörpers 50a eine leichte Bauweise realisiert ist.

Die vorgenannte große Höhe ermöglicht es auch, dass das Scharnier 37 vom Schutzkörper 50b eingehaust wird, obwohl es im Unterschied zur Anhängekupplung 10a nicht in Richtung des Kupplungsarmes 11a, sondern dazu entgegengesetzt angeordnet ist. Zur Aufnahme des Scharniers 37 weist der Schutzkörper 50b eine Aussparung 70 auf. Mithin steht also das Scharnier 37 nicht vor die Aufgleitkontur 59b nach oben hin, d.h. zur freien Seite hin, ab.

Die formschlüssige Anpassung des Schutzkörpers 50b ist hinsichtlich des Kupplungsarmes 11b noch weiter entwickelt als beim Schutzkörper 50a im Hinblick auf den Kupplungsarm 11a. So ist beispielsweise am freien Ende des Rampenabschnittes 55b, mit dem dieser an den Kupplungsarm 11b angrenzt, eine in der Vorderansicht im Wesentlichen U-förmige Aufnahme 71 vorhanden, in die die dem Schutzkörper 50b zugeordnete Querkontur des Kupplungsarmes 11b formschlüssig, zumindest im Wesentlichen formschlüssig "passt".

Zusammenfassend kann man also sagen, dass der erfindungsgemäße Schutzkörper 50a, 50b es ermöglicht, dass eine konventionelle, an sich gegenüber mechanischen Beanspruchungen recht empfindliche Steckdose oder ein Gehäuse derselben, optimal geschützt ist.

Durch die Komponentenbauweise, die in der Zeichnung dargestellt ist, ist eine variable Austauschbarkeit des Schutzkörpers, der Steckdose bzw. der Kontaktvorrichtung, je nach Bedarf möglich.

Weiterhin ist es denkbar, dass passend zu unterschiedlichen Geometrien von jeweiligen Kupplungsarmen stets dieselbe Bauform einer Kontaktvorrichtung bzw. deren Gehäuse verwendet wird, so dass lediglich die Geometrie des jeweiligen erfindungsgemäßen Schutzkörpers an die Gegebenheiten des Kupplungsarmes anzupassen ist.

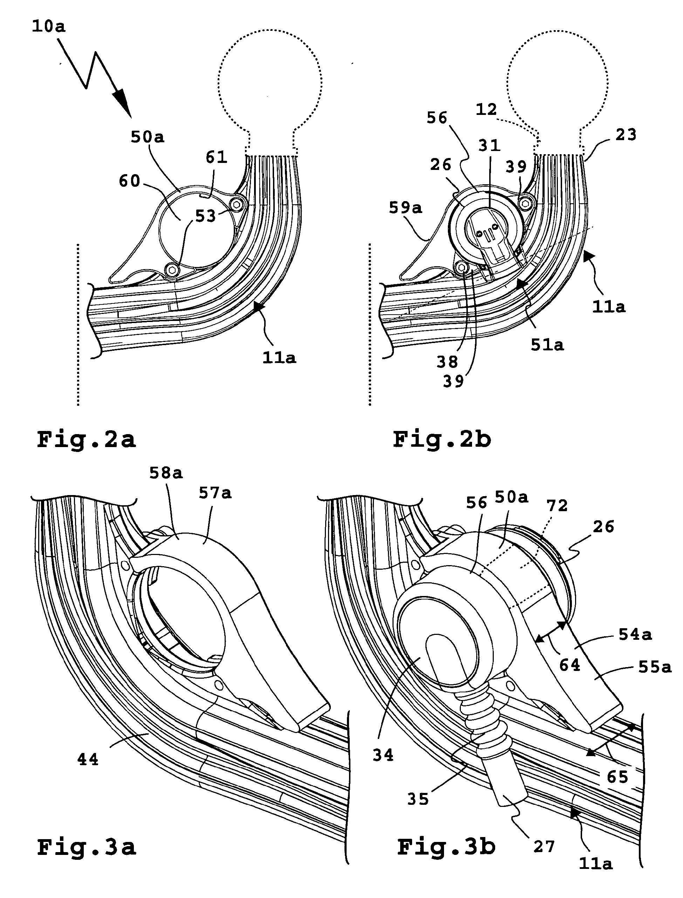

Der Schutzkörper muss das Gehäuse 32 auch nicht vollständig umschließen. Beispielsweise kann, wie in Figur 3b angedeutet, vorgesehen sein, dass der Schutzkörper 50a einen Zwischenraum 72 zwischen der Aufgleitkontur 59a und dem an der zur Aufgleitkontur 59a entgegengesetzten Seite des Gehäuses 32 angeordneten Halteschenkel 58a aufweist, wobei der von der Kupplungsarmkontur 42a am weitesten entfernte Abschnitt 56 des Gehäuses 32 in dem Zwischenraum 72 angeordnet ist, gegebenenfalls sogar vor die Rampe 54a etwas vorsteht. Der Zwischenraum 72 könnte auch breiter sein.

## Patentansprüche

1. Kontaktvorrichtungsanordnung für eine Anhängekupplung (10a; 10b) für ein Kraftfahrzeug (17), insbesondere ein Personen-Kraftfahrzeug, wobei die Kontaktvorrichtungsanordnung (51a; 51b) eine Kontaktvorrichtung (26) zur Herstellung einer Verbindung zwischen einem Bordnetz des Kraftfahrzeugs (17) und einem Anhänger (15) umfasst, wobei die Anhängekupplung (10a; 10b) einen Kupplungsarm (11a; 11b) aufweist, an dessen freiem Ende (12) ein Kuppelkörper (24), insbesondere ein Kugelkopf (13), zur Befestigung des Anhängers (15) angeordnet ist und der einen Halteabschnitt (16) zur Befestigung an dem Kraftfahrzeug (17) und einen Tragabschnitt (25) zwischen dem Halteabschnitt (16) und dem Kuppelkörper (24) zur Befestigung der Kontaktvorrichtung (26) aufweist, wobei ein Gehäuse (32) der Kontaktvorrichtung (26) vor eine Kupplungsarmkontur (42a; 42b) des Kupplungsarms (11a; 11b) vorsteht, wobei sie einen von dem Kupplungsarm (11a; 11b) separaten Schutzkörper (50a; 50b) mit einer Aufgleitkontur (59a; 59b) zum Aufgleiten eines am Kupplungsarm (11a; 11b) entlang gleitenden Objekts, insbesondere eines Abschleppseils (48), über das Gehäuse (32) hinweg aufweist, und dass sich im am Kupplungsarm (11a; 11b) montierten Zustand der Kontaktvorrichtungsanordnung (51a; 51b) eine Rampe (54a; 54b) der Aufgleitkontur (59a; 59b) zwischen der Kupplungsarmkontur (42a; 42b) und einem von der Kupplungsarmkontur (42a; 42b) am weitesten entfernten Abschnitt (56) des Gehäuses (32) erstreckt, **dadurch gekennzeichnet, dass** zumindest ein Teilabschnitt der Aufgleitkontur (59a; 59b) an dem Gehäuse (32) angeordnet ist und/oder dass das Gehäuse (32) im am Kupplungsarm (11a; 11b) montierten Zustand der Kontaktvorrichtungsanordnung (51a; 51b) zwischen dem Schutzkörper (50a; 50b) und dem Kupplungsarm (11a; 11b) angeordnet ist.

2. Kontaktvorrichtungsanordnung nach Anspruch 1, **dadurch gekennzeichnet, dass** die Aufgleitkontur (59a; 59b) sich im am Kupplungsarm (11a; 11b) montierten Zustand der Kontaktvorrichtungsanordnung (51a; 51b) über den von der Kupplungsarmkontur (42a; 42b) am weitesten entfernten Abschnitt des Gehäuses (32) hinweg erstreckt und/oder dass die Aufgleitkontur (59a; 59b) im am Kupplungsarm (11a; 11b) montierten Zustand der Kontaktvorrichtungsanordnung (51a; 51b) an einer oder um eine von dem Kuppelkörper (24) abgewandten Seite des Gehäuses (32) verläuft und/oder dass die Aufgleitkontur (59a; 59b) in einem Winkel von etwa 60 Grad bis 35 Grad, insbesondere etwa 45 Grad, oder kleiner als 45 Grad winkelig zur Horizontalen und/oder zu einem Bereich des Kupplungsarms (11a; 11b) ist, von dem die Aufgleitkontur (59a; 59b) im am Kupplungsarm (11a; 11b) montierten Zustand der Kontaktvorrichtungsanordnung (51a; 51b) weg verläuft und/oder dass die Aufgleitkontur (59a; 59b) im am Kupplungsarm (11a; 11b) montierten Zustand der Kontaktvorrichtungsanordnung (51a; 51b) an einer dem Halteabschnitt (16) zugewandten Seite des Tragabschnitts (25) angeordnet ist.

3. Kontaktvorrichtungsanordnung nach Anspruch 1 oder 2, **dadurch gekennzeichnet, dass** der Schutzkörper (50a; 50b) einen integralen Bestandteil des Gehäuses (32) bildet oder dass der Schutzkörper (50a; 50b) von dem Gehäuse (32) separat ist.

4. Kontaktvorrichtungsanordnung nach einem der vorhergehenden Ansprüche, **dadurch gekennzeichnet, dass** der Schutzkörper (50a; 50b) und das Gehäuse (32) mindestens ein Paar miteinander fluchtender Montagebohrungen (39, 53) für einen zum Einschrauben in den Kupplungsarm (11a; 11b) vorgesehenen Montagebolzen (49) aufweist und/oder dass der Schutzkörper (50a; 50b) an einem Montagebereich, mit dem er an dem Kupplungsarm (11a; 11b) befestigbar ist, eine zur Kupplungsarmkontur (42a; 42b), insbesondere Querkontur des Kupplungsarms (11a; 11b), passende Aufnahme (71) aufweist und/oder dass der Schutzkörper (50a; 50b) eine Aussparung (70) und/oder eine Fixierung für eine zu der Kontaktvorrichtung (26) führenden Leitung (35) und/oder einen Montagevorsprung (62, 63) der Kontaktvorrichtung (26) und/oder für ein Scharnier (37) der Kontaktvorrichtung (26) aufweist, mit dem ein Deckel (37) schwenkbar an dem Gehäuse (32) gelagert ist.

5. Kontaktvorrichtungsanordnung nach einem der vorhergehenden Ansprüche, **dadurch gekennzeichnet, dass** der Schutzkörper (50a; 50b), insbesondere in Zusammenwirkung mit dem Kupplungsarm (11a; 11b), eine Gehäuseaufnahme (60) zur Aufnahme des Gehäuses (32) der Kontaktvorrichtung (26) begrenzt und/oder der Schutzkörper (50a; 50b) Haltemittel, insbesondere Rastmittel, zum Halten des Gehäuses (32) aufweist.

6. Kontaktvorrichtungsanordnung nach einem der vorhergehenden Ansprüche, **dadurch gekennzeichnet, dass** das Gehäuse (32) im am Kupplungsarm (11a; 11b) montierten Zustand der Kontaktvorrichtungsanordnung (51a; 51b) an einer Innenbogenseite (47) eines Bogenabschnitts des Kupplungsarms (11a; 11b) angeordnet ist.

7. Kontaktvorrichtungsanordnung nach einem der vorhergehenden Ansprüche, **dadurch gekennzeichnet, dass** zumindest ein Teilabschnitt der Aufgleitkontur (59a; 59b) sich in der Art einer Sekante über den Bogenabschnitt hinweg erstreckt.

8. Kontaktvorrichtungsanordnung nach einem der vorhergehenden Ansprüche, **dadurch gekennzeichnet, dass** der Schutzkörper (50a; 50b) in der Art einer Spange ausgestaltet ist, unterhalb derer das Gehäuse (32) im am Kupplungsarm (11a; 11b) montierten Zustand der Kontaktvorrichtungsanordnung (51a; 51b) angeordnet ist.

9. Kontaktvorrichtungsanordnung nach einem der vorhergehenden Ansprüche, **dadurch gekennzeichnet, dass** der Schutzkörper (50a; 50b) eine vom Kupplungsarm (11a; 11b) abgewandte, zum Kupplungsarm (11a; 11b) entgegengesetzte Seite des Gehäuses (32) derart ummantelt, dass das Gehäuse (32) nicht vor die Aufgleitkontur (59a; 59b) vorsteht und/oder dass der Schutzkörper (50a; 50b) eine Verstärkungsrippenstruktur (66) aufweist, wobei die Verstärkungsrippenstruktur (66) zweckmäßigerweise quer, insbesondere etwa rechtwinkelig zu einer Gleitfläche der Aufgleitkontur (59a; 59b) verlaufende Rippen (67) aufweist.

10. Kontaktvorrichtungsanordnung nach einem der vorhergehenden Ansprüche, **dadurch gekennzeichnet, dass** der Schutzkörper (50a; 50b) eine etwa oder mindestens einer Querbreite (65) des Kupplungsarms (11a; 11b) entsprechende Querbreite (68) aufweist und/oder dass die Aufgleitkontur (59a; 59b) im am Kupplungsarm (11a; 11b) montierten Zustand der Kontaktvorrichtungsanordnung (51a; 51b) nach oben und/oder nach unten vor die Kupplungsarmkontur (42a; 42b) vorsteht.

11. Kontaktvorrichtungsanordnung nach einem der vorhergehenden Ansprüche, **dadurch gekennzeichnet, dass** der Schutzkörper (50a; 50b) eine Rückwand für das Gehäuse (32) der Kontaktvorrichtung (26) bildet oder eine der Rückwand des Gehäuses (32) der Kontaktvorrichtung (26) entsprechende Kontur aufweist und/oder dass eine Kontakte aufweisende Kontaktstirnseite (31) der Kontaktvorrichtung (26) im am Kupplungsarm (11a; 11b) montierten Zustand der Kontaktvorrichtungsanordnung (51a; 51b) von einer Querseite des Kupplungsarms zugänglich ist.

12. Kontaktvorrichtungsanordnung nach einem der vorhergehenden Ansprüche, **dadurch gekennzeichnet, dass** der Schutzkörper (50a; 50b) einen Zwischenraum (72) zwischen der Aufgleitkontur (59a; 59b) und einem an einer zu der Aufgleitkontur (59a; 59b) entgegengesetzten Seite des Gehäuses (32) angeordneten Halteschenkel (58a; 58b) aufweist, und dass der von der Kupplungsarmkontur (42a; 42b) am weitesten entfernte Abschnitt (56) des Gehäuses (32) in dem Zwischenraum (72) angeordnet ist.

13. Kontaktvorrichtungsanordnung nach einem der vorhergehenden Ansprüche, **dadurch gekennzeichnet, dass** sie einen Bestandteil der Anhängekupplung (10a; 10b) bildet.

14. Kontaktvorrichtungsanordnung nach Anspruch 13, **dadurch gekennzeichnet, dass** die Anhängekupplung (10a; 10b) eine Halterung (18) zum Halten des Halteabschnitts (16) des Kupplungsarms (11a; 11b) aufweist, und dass der Kupplungsarm (11a; 11b) an der Halterung (18) lösbar befestigbar oder zwischen einer zum Anhängen des Anhängers (15) vorgesehen Arbeitsstellung und einer für den Nichtgebrauch vorgesehenen Ruhestellung beweglich, insbesondere verschieblich und/oder schwenkbar, gelagert ist.

## Claims

1. Contact device arrangement for a trailer coupling (10a; 10b) for a motor vehicle (17), in particular a passenger car, wherein the contact device arrangement (51 a; 51 b) comprises a contact device (26) for establishing a connection between an electrical system of the motor vehicle (17) and a trailer (15), wherein the trailer coupling (10a; 10b) comprises a coupling arm (11 a; 11 b), at the free end (12) of which is located a coupling body (24), in particular a tow ball (13), for securing the trailer (15), and which comprises a holding section (16) for securing to the motor vehicle (17) and a support section (25) between the holding section (16) and the coupling body (24) for securing the contact device (26), wherein a housing (32) of the contact device (26) projects in front of a coupling arm contour (42a; 42b) of the coupling arm (11a; 11b), wherein it comprises a protective body (50a; 50b), which is separate from the coupling arm (11 a; 11 b) and has a slide-on contour (59a; 59b) for an object, in particular a tow rope (48), to slide along the coupling arm (11 a; 11 b) across the housing (32), and wherein a ramp (54a; 54b) of the slide-on contour (59a; 59b) extends, if the contact device arrangement (51 a; 51 b) is mounted on the coupling arm (11 a; 11b), between the coupling arm contour (42a; 42b) and a section (56) of the housing (32) which is farthest away from the coupling arm contour (42a; 42b), **characterised in that** at least a sub-section of the slide-on contour (59a; 59b) is located on the housing (32), and/or **in that** the housing (32) is located between the protective body (50a; 50b) and the coupling arm (11 a; 11 b) when the contact device arrangement (51 a; 51 b) is mounted on the coupling arm (11 a; 11 b).

2. Contact device arrangement according to claim 1, **characterised in that** the slide-on contour (59a; 59b) extends beyond the section of the housing (32) which is farthest away from the coupling arm contour (42a; 42b) in the mounted state of the contact device arrangement (51 a; 51 b), and/or **in that** the slide-on contour (59a; 59b) extends, if the contact device arrangement (51 a; 51 b) is mounted on the coupling arm (11 a; 11 b), along or about a side of the housing (32) which is remote from the coupling body (24), and/or **in that** the slide-on contour (59a; 59b) lies at an angle of approximately 60 degrees to 35 degrees, in particular of approximately 45 degrees or less than 45 degrees, relative to the horizontal and/or to a region of the coupling arm (11 a; 11 b) from which the slide-on contour (59a; 59b) extends if the contact device arrangement (51 a; 51 b) is mounted on the coupling arm (11 a; 11 b), and/or **in that** the slide-on contour (59a; 59b) is located on a side of the support section (16) which faces the holding section (16) if the contact device arrangement (51 a; 51 b) is mounted on the coupling arm (11 a; 11 b).

3. Contact device arrangement according to claim 1 or 2, **characterised in that** the protective body (50a; 50b) forms an integral part of the housing (32), or **in that** the protective body (50a; 50b) is separate from the housing (32).

4. Contact device arrangement according to any of the preceding claims, **characterised in that** the protective body (50a; 50b) and the housing (32) have at least one pair of aligned mounting holes (39, 53) for a mounting bolt (49) provided for tightening into the coupling arm (11 a; 11b), and/or **in that** the protective body (50a; 50b) has, in a mounting region where it can be secured to the coupling arm, (11 a; 11 b), a receptacle (71) matching the coupling arm contour (42a; 42b), in particular the transverse contour of the coupling arm (11 a; 11 b), and/or **in that** the protective body (50a; 50b) has a recess (70) and/or a fixing for a line (35) leading to the contact device (26) and/or a mounting projection (62, 63) of the contact device (26) and/or for a hinge (37) of the contact device (26), by means of which hinge (37) a cover (37) is pivotably mounted on the housing (32).

5. Contact device arrangement according to any of the preceding claims, **characterised in that** the protective body (50a; 50b) bounds, in particular together with the coupling arm (11 a; 11 b), a housing receptacle (60) for the accommodation of the housing (32) of the contact device (26), and/or in that the protective body (50a; 50b) comprises holding means, in particular latching means, for holding the housing (32).

6. Contact device arrangement according to any of the preceding claims, **characterised in that** the housing (32) is located on an inner curved side (47) of a curved section of the coupling arm (11a; 11b) if the contact device arrangement (51 a; 51 b) is mounted on the coupling arm (11 a; 11 b).

7. Contact device arrangement according to any of the preceding claims, **characterised in that** at least a sub-section of the slide-on contour (59a; 59b) extends across the curved section in the manner of a secant.

8. Contact device arrangement according to any of the preceding claims, **characterised in that** the protective body (50a; 50b) is designed in the manner of a clasp, below which the housing (32) is located if the contact device arrangement (51 a; 51 b) is mounted on the coupling arm (11 a; 11 b).

9. Contact device arrangement according to any of the preceding claims, **characterised in that** the protective body (50a; 50b) encases a side of the housing (32) which is remote from the coupling arm (11 a; 11 b) and opposite the coupling arm (11 a; 11 b) in such a way that the housing (32) does not project in front of the slide-on contour (59a; 59b), and/or **in that** the protective body (50a; 50b) has a reinforcing rib structure (66), the reinforcing rib structure (66) having ribs (67) expediently extending across, in particular at an approximately right angle to, a sliding surface of the slide-on contour (59a; 59b).

10. Contact device arrangement according to any of the preceding claims, **characterised in that** the protective body (50a; 50b) has a lateral width (68) which corresponds approximately or at least to a lateral width (65) of the coupling arm (11 a; 11 b), and/or **in that** the slide-on contour (59a; 59b) projects upwards and/or downwards in front of the coupling arm contour (42a; 42b) if the contact device arrangement (51 a; 51 b) is mounted on the coupling arm (11a; 11b).

11. Contact device arrangement according to any of the preceding claims, **characterised in that** the protective body (50a; 50b) forms a rear wall for the housing (32) of the contact device (26) or has a contour matching the rear wall of the housing (32) of the contact device (26), and/or **in that** a contact end face (31) of the contact device (26), which is provided with contacts, is accessible from a transverse side of the coupling arm if the contact device arrangement (51 a; 51 b) is mounted on the coupling arm (11a; 11 b).

12. Contact device arrangement according to any of the preceding claims, **characterised in that** the protective body (50a; 50b) has a space (72) between the slide-on contour (59a; 59b) and a holding leg (58a; 58b) located on a side of the housing (32) opposite the slide-on contour (59a; 59b), and **in that** the section (56) of the housing (32) which is farthest away from the coupling arm contour (42a; 42b) is located in the space (72).

13. Contact device arrangement according to any of the preceding claims, **characterised in that** it forms a part of the trailer coupling (10a; 10b).

14. Contact device arrangement according to claim 13, **characterised in that** the trailer coupling (10a; 10b) comprises a holder (18) for holding the holding section (16) of the coupling arm (11 a; 11 b), and **in that** the coupling arm (11a; 11b) can be releasably secured to the holder (18) and is mounted for movement, in particular for sliding and/or pivoting, between an operating position for attaching the trailer (15) and a rest position provided for non-use.

## Revendications

1. Agencement de dispositif de contact pour un attelage (10a ; 10b) pour un véhicule automobile (17), en particulier un véhicule automobile personnel, l'agencement de dispositif de contact (51a ; 51 b) comportant un dispositif de contact (26) pour l'établissement d'une liaison entre un réseau de bord du véhicule automobile (17) et une remorque (15), l'attelage (10a; 10b) présentant un bras d'attelage (11a ; 11 b), sur l'extrémité libre duquel (12) est agencé un corps d'attelage (24), en particulier une tête de boule (13) pour la fixation de la remorque (15) et qui présente une section de retenue (16) pour la fixation sur le véhicule automobile (17) et une section porteuse (25) entre la section de retenue (16) et le corps d'attelage (24) pour la fixation du dispositif de contact (26), un boîtier (32) du dispositif de contact (26) dépassant d'un contour de bras d'attelage (42a ; 42b) du bras d'attelage (11a ; 11 b), celui-ci présentant un corps de protection (50a ; 50b) séparé du bras d'attelage (11a ; 11 b) avec un contour de glissement (59a ; 59b) pour le glissement d'un objet glissant le long du bras d'attelage (11 a; 11 b), en particulier d'un câble de remorquage (48), au-delà du boîtier (32), et en ce que dans l'état monté sur le bras d'attelage (11a; 11 b) de l'agencement de dispositif de contact (51a ; 51 b), une rampe (54a ; 54b) du contour de glissement (59a ; 59b) s'étend entre le contour de bras d'attelage (42a ; 42b) et une section (56) la plus éloignée du contour de bras d'attelage (42a ; 42b) du boîtier (32), **caractérisé en ce qu'**au moins une section partielle du contour de glissement (59a ; 59b) est agencée sur le boîtier (32) et/ou **en ce que** le boîtier (32) est agencé dans l'état monté sur le bras d'attelage (11a ; 11 b) de l'agencement de dispositif de contact (51 a ; 51 b) entre le corps de protection (50a ; 50b) et le bras d'attelage (11a ; 11b).

2. Agencement de dispositif de contact selon la revendication 1, **caractérisé en ce que** le contour de glissement (59a ; 59b) s'étend au-delà de la section la plus éloignée du contour de bras d'attelage (42a ; 42b) du boîtier (32) dans l'état monté sur le bras d'attelage (11a ; 11 b) de l'agencement de dispositif de contact (51a ; 51 b) et/ou **en ce que** le contour de glissement (59a ; 59b) s'étend dans l'état monté sur le bras d'attelage (11 a; 11 b) de l'agencement de dispositif de contact (51 a ; 51 b) sur un ou autour d'un côté éloigné du corps d'attelage (24) du boîtier (32) et/ou **en ce que** le contour de glissement (59a ; 59b) est dans un angle d'environ 60 à 35 degrés, en particulier d'environ 45 degrés ou inférieur à 45 degrés angulairement à l'horizontale et/ou à une zone du bras d'attelage (11a ; 11 b), de laquelle le contour de glissement (59a ; 59b) s'étend dans l'état monté sur le bras d'attelage (11 a ; 11 b) de l'agencement de dispositif de contact (51 a ; 51 b) et/ou en ce que le contour de glissement (59a ; 59b) est agencé dans l'état monté sur le bras d'attelage (11 a ; 11 b) de l'agencement de dispositif de contact (51 a ; 51 b) sur un côté tourné vers la section de retenue (16) de la section porteuse (25).

3. Agencement de dispositif de contact selon la revendication 1 ou 2, **caractérisé en ce que** le corps de protection (50a ; 50b) forme un élément intégral du boîtier (32) ou **en ce que** le corps de protection (50a ; 50b) est séparé du boîtier (32).

4. Agencement de dispositif de contact selon l'une quelconque des revendications précédentes, **caractérisé en ce que** le corps de protection (50a ; 50b) et le boîtier (32) présentent au moins une paire de perçages de montage (39, 53) s'alignant les uns sur les autres pour un boulon de montage (49) prévu pour le vissage dans le bras d'attelage (11 a ; 11 b) et/ou **en ce que** le corps de protection (50a ; 50b) présente sur une zone de montage, avec laquelle il peut être fixé sur le bras d'attelage (11 a ; 11 b), un logement (71) adapté au contour de bras d'attelage (42a; 42b), en particulier au contour transversal du bras d'attelage (11 a; 11 b) et/ou **en ce que** le corps de protection (50a; 50b) présente un évidement (70) et/ou une fixation pour un câble (35) menant au dispositif de contact (26) et/ou pour une saillie de montage (62, 63) du dispositif de contact (26) et/ou pour une charnière (37) du dispositif de contact (26), avec laquelle un couvercle (37) est logé de manière à pouvoir pivoter sur le boîtier (32).

5. Agencement de dispositif de contact selon l'une quelconque des revendications précédentes, **caractérisé en ce que** le corps de protection (50a ; 50b) délimite, en particulier en coopération avec le bras d'attelage (11a ; 11b), un logement de boîtier (60) pour la réception du boîtier (32) du dispositif de contact (26) et/ou le corps de protection (50a ; 50b) présente des moyens de retenue, en particulier des moyens d'encliquetage pour la retenue du boîtier (32).

6. Agencement de dispositif de contact selon l'une quelconque des revendications précédentes, **caractérisé en ce que** le boîtier (32) est agencé dans l'état monté sur le bras d'attelage (11 a; 11 b) de l'agencement de dispositif de contact (51 a ; 51 b) sur un côté d'arc intérieur (47) d'une section d'arc du bras d'attelage (11 a ; 11 b).

7. Agencement de dispositif de contact selon l'une quelconque des revendications précédentes, **caractérisé en ce qu'**au moins une section partielle du contour de glissement (59a ; 59b) s'étend à la manière d'une sécante au-delà de la section d'arc.

8. Agencement de dispositif de contact selon l'une quelconque des revendications précédentes, **caractérisé en ce que** le corps de protection (50a ; 50b) est configuré comme une boucle, sous laquelle le boîtier (32) est agencé dans l'état monté sur le bras d'attelage (11 a; 11 b) de l'agencement de dispositif de contact (51a ; 51 b).

9. Agencement de dispositif de contact selon l'une quelconque des revendications précédentes, **caractérisé en ce que** le corps de protection (50a ; 50b) entoure un côté opposé au bras d'attelage (11a ; 11 b), éloigné du bras d'attelage (11a ; 11 b) du boîtier (32) de telle manière que le boîtier (32) ne dépasse pas du contour de glissement (59a ; 59b) et/ou **en ce que** le corps de protection (50a ; 50b) présente une structure de nervure de renforcement (66), la structure de nervure de renforcement (66) présentant des nervures (67) s'étendant de manière appropriée transversalement, en particulier à peu près à angle droit à une surface glissante du contour de glissement (59a ; 59b).

10. Agencement de dispositif de contact selon l'une quelconque des revendications précédentes, **caractérisé en ce que** le corps de protection (50a ; 50b) présente une largeur transversale (68) correspondant à peu près ou au moins à une largeur transversale (65) du bras d'attelage (11a ; 11 b) et/ou **en ce que** le contour de glissement (59a ; 59b) dépasse dans l'état monté sur le bras d'attelage (11 a ; 11 b) de l'agencement de dispositif de contact (51 a ; 51 b) vers le haut et/ou vers le bas du contour de bras d'attelage (42a ; 42b).

11. Agencement de dispositif de contact selon l'une quelconque des revendications précédentes, **caractérisé en ce que** le corps de protection (50a ; 50b) forme une paroi arrière pour le boîtier (32) du dispositif de contact (26) ou présente un contour correspondant à la paroi arrière du boîtier (32) du dispositif de contact (26) et/ou **en ce qu'**un côté avant de contact (31) présentant des contacts du dispositif de contact (26) est accessible dans l'état monté sur le bras d'attelage (11 a ; 11 b) de l'agencement de dispositif de contact (51 a ; 51 b) depuis un côté transversal du bras d'attelage.

12. Agencement de dispositif de contact selon l'une quelconque des revendications précédentes, **caractérisé en ce que** le corps de protection (50a ; 50b) présente un espace intermédiaire (72) entre le contour de glissement (59a ; 59b) et une branche de retenue (58a ; 58b) agencée sur un côté opposé au contour de glissement (59a ; 59b) du boîtier (32), et **en ce que** la section (56) la plus éloignée du contour de bras d'attelage (42a ; 42b) du boîtier (32) est agencée dans l'espace intermédiaire (72).

13. Agencement de dispositif de contact selon l'une quelconque des revendications précédentes, **caractérisé en ce qu'**il forme un élément de l'attelage (10a ; 10b).

14. Agencement de dispositif de contact selon la revendication 13, **caractérisé en ce que** l'attelage (10a; 10b) présente un support (18) pour maintenir la section de retenue (16) du bras d'attelage (11a ; 11 b) et **en ce que** le bras d'attelage (11 a; 11 b) peut être fixé de manière détachable sur le support (18) ou est logé de manière mobile, en particulier coulissante et/ou pivotante entre une position de travail prévue pour atteler la remorque (15) et une position de repos prévue pour la non-utilisation.
